# EUROPEAN PATENT APPLICATION

(11) **EP 4 414 402 A1**
(43) Date of publication of application: **14.08.2024**
(21) Application number: 23155544.2
(22) Date of filing: 08.02.2023
(51) Int. Cl.: C08G 59/50, C09D 163/00

(54) **A FIRE PROTECTION COMPOSITE MADE OF A LIQUID APPLIED COATING AND A MAT OR FLEECE FOR AN ELECTRIC VEHICLE BATTERY**

(71) Applicant: Henkel AG & Co. KGaA, 40589 Düsseldorf (DE)
(72) Inventor: Franken, Uwe, 41542 Dormagen (DE); Kreiskoether, Kim Dana, 52146 Würselen (DE); Lammerschop, Olaf, 47802 Krefeld (DE)

(57) **Abstract**

The present invention relates to a fire protection composite, which is made of a liquid applied coating and a mat or fleece; a process for preparing the fire protection composite; use of the fire protection composite for electric vehicle battery; an electric vehicle battery containing the fire protection composite; and a process for preparing the electric vehicle battery.

## Description

### Field of the invention

The present invention is directed to a fire protection composite, which is made of a liquid applied coating and a mat or fleece, which can be used for electric vehicle battery.

### Background of the invention

Number of electric vehicles has increased in the recent years, and a battery is a main power source in the electric vehicles. Due to the increased energy density of the battery, a further improved fire protection and heat shielding of the battery for protecting passengers in vehicles is required.

However, all the available fire protection products of the battery either do not have sufficient fire protection and heat shielding behaviour, or have mechanical stability and electrical insulation issues, especially during a thermal runaway event.

Therefore, there is a need for a fire protection composite exhibiting improvements in fire protection, heat shielding behaviour and mechanical stability.

### Summary of the invention

The present invention provides a fire protection composite, which is made of a liquid applied coating and a mat or fleece.

The present invention further provides a process for preparing the fire protection composite according to the present invention, comprising applying the liquid applied coating in the present invention on a substrate; subsequently placing the mat or fleece in the present invention on the coating; applying another liquid applied coating in the present invention on the mat or fleece, if necessary; and drying the coating at room temperature or an elevated temperature.

The present invention also provides use of a fire protection composite according to the present invention for electric vehicle battery, and preferably for battery housing in electric vehicle.

Furthermore, the present invention provides an electric vehicle battery containing a fire protection composite according to the present invention.

In addition, the present invention provides a process for preparing an electric vehicle battery according to the present invention, comprising: preparing a fire protection composite on a lid and/or housing of the electric vehicle battery according to the process for preparing the fire protection composite according to the present invention.

### Short description of the figures

Figure 1 illustrates the adhesion of the mat on the coating in the fire protection composite according to the present invention.
Figure 2 illustrates the wettability of the liquid-applied fire protection coating on the mat in the fire protection composites according to the present invention, wherein the picture of Fig. 2a corresponds to Example 4, and the picture of Fig. 2b corresponds to Example 3.
Figure 3 illustrates a test method used to determine a fire protection composite's ability to resist heat and fire over a defined period of time.
Figure 4 illustrates comparative test results on heat and fire retardance between the composite according to the present invention and the reference e-coated steel substrate.
Figure 5 illustrates the pictures of the reference e-coated steel substrate without any coating and mat (Fig. 5a) and the fire protection composite according to the present invention (Fig. 5b) after a thermal runaway test with a 50 Ah prismatic cell.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term *"consisting of"* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and the like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

*"Two-component (2K) compositions"* are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in orderto accelerate the cross-linking reaction.

As used herein, the term "battery" may refer to any of a variety of different cell chemistries and configurations including, but not limited to, lithium ion (e.g., lithium iron phosphate, lithium cobalt oxide, other lithium metal oxides, etc.), lithium ion polymer, nickel metal hydride, nickel cadmium, nickel hydrogen, nickel zinc, silver zinc, or other battery type/configuration.

As used herein, the term "electric vehicle" may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

### Fire protection composite

The present invention relates to a fire protection composite, which is made of a liquid applied coating and a mat or fleece.

Surprisingly, the inventors found that the fire protection composite according to the present invention exhibits significant improvements in fire protection, heat shielding behaviour and/or mechanical stability as compared with the prior art ones.

Preferably, the thickness of the composite is from 0.2 to 4 mm, and more preferably from 0.5 to 2 mm. When the thickness of the composite is within the above ranges, depending on the battery design, an optimum balance between the necessary layer thickness for sufficient fire protection and the smallest possible layer thickness to save installation space in the battery system is achieved.

As used herein, all the thicknesses are determined with a calliper and/ or an ultrasonic thickness measuring device.

### Liquid applied coating

As used herein, the term "liquid applied coating" refers to a coating, some or all of whose components are liquid when applied, preferably at 5 to 80°C, and which can be hardened by cross-linking or evaporation of the solvent. The viscosity of the coating is not specifically limited; however, when the coating is epoxy-based, the viscosity is preferably in the range of 15 to 30 Pa·s at 25°C, and when the coating is water-based, the viscosity is preferably in the range of 10 to 1000 Pa·s at 25°C.

As used herein, all the viscosities are determined using a Brookfield viscometer (Spindle 27) at 25°C.

Preferably, the liquid applied coating according to the present invention is a two-component epoxy-based intumescent material and/or a one-component water-based material with inorganic fillers and/or fibres. When the coating is the two-component epoxy-based intumescent material and/or a one-component water-based material with inorganic fillers and/or fibres, the compatibility of the coating with the mat or fleece is improved, and thus, the adhesion and mechanical stability of the fire protection composite according to the present invention is further improved.

In a preferred embodiment of the present invention, the two-component epoxy-based intumescent material comprises:
a first part comprising
   1) an epoxy resin; and
   2) a flame retardant compound;
   and
a second part comprising
   1) a first amine comprising N,N'-bis(3-aminopropyl)ethylenediamine and 3,3'-oxybis(ethylene-oxy) bis(propylamine);
   2) a second amine comprising m-phenylenebis(methylamine) and formaldehyde, polymer with 1,3-benzenedimethanamine and phenol; and
   3) a flame retardant compound.

When the above-mentioned two-component epoxy-based intumescent material is used as the coating in the present invention, it can be applied via flat streaming for 2D components (like battery lid), which means it does not need masking as there is no overspray and additionally no aerosol formation; and a thin initial layer thickness can be applied, which saves installation space and still provides good heat protection due to the intumescent reaction.

In another preferred embodiment of the present invention, the one-component water-based material with inorganic fillers and/or fibres is a non-reactive water-based dispersion containing an acrylic binder, glass fibres and a flame-retardant component.

When the above-mentioned one-component water-based material with inorganic fillers and/or fibres is used as the coating in the present invention, water is used as an environmentally compatible and health-friendly solvent, the one-component material is advantageous with regard to equipment procurement, no flame or smoke is formed during heat/flame exposure, and there is no chemical reaction in the battery system, which, depending on the design, could not block the venting channels, as the heat protection is formed by the initially applied layer thickness.

The two-component epoxy-based intumescent material according to the present invention comprises an epoxy resin. The epoxy resin is present in the first part of the composition.

Preferably, the epoxy resin is selected from the group consisting of epoxy resin based on bisphenol A and epichlorohydrin, bisphenol-A diglycidyl ether epoxy resin; bisphenol-F diglycidyl ether epoxy resin; cresol novolac epoxy resin, a C4-28 alkylene diglycidyl ether, a C2-28 alkylene- and/or alkenylene-diglycidyl ester; a C2-28 alkylene-, mono- and poly-phenol glycidyl ether; a polyglycidyl ether of trimethylol propane, pyrocatechol, resorcinol, hydroquinone, 4,4',4"-trihydroxyphenyl methane, 4,4'-dihydroxydiphenyl methane, 4,4'-dihydroxy-3,3'-dimethyldiphenyl methane, 4,4'-dihydroxydiphenyl dimethyl methane, 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, or tris(4-hydroxyphyenyl)methane; a methylenebis(naphthalene)-diol, - triol, or -tetrol, 2,7,2',7'-tetraglycidyloxynaphthalene methane and/or 1,1,2,2-tetrakis(4-glycidyloxyphenyl)ethane, cresol novolac epoxy resin sorbitol glycidyl ether, and mixtures thereof, more preferably the epoxy resin is based on bisphenol A and epichlorohydrin.

Above listed epoxy resins are preferred, and especially, the epoxy resin based on bisphenol A and epichlorohydrin is preferred, because they are able to resist flames when exposed to under the flame test.

Suitable commercially available epoxy resin for use in the present invention include but is not limited to D.E.R 331 from Olin.

The two-component epoxy-based intumescent material according to the present invention may have the epoxy resin present from 30 to 60% by weight of the total weight of the first part of the composition, preferably from 35 to 50% and more preferably from 38 to 42%.

The above ranges are preferred because they may provide optimal heat and flame-retardant behaviour and rheological behaviour for the composition.

The two-component epoxy-based intumescent material according to the present invention comprises a combination of a first amine and a second amine. The first amine and the second amine are present in the second part of the composition.

In one embodiment the first amine comprises a mixture of N,N'-bis(3-aminopropyl)ethylenediamine and 3,3'-oxybis(ethylene-oxy) bis(propylamine) and the second amine comprises a mixture of m-phenylenebis (methylamine) and formaldehyde, polymer with 1,3-benzenedimethanamine and phenol.

In one embodiment, the first amine is consisting of a mixture of N,N'-bis(3-aminopropyl)ethylenediamine and 3,3'-oxybis(ethylene-oxy) bis(propylamine) and the second amine is consisting of a mixture of m-phenylenebis(methylamine) and formaldehyde, polymer with 1,3-benzenedimethanamine and phenol.

In another embodiment the first amine is polypropylene glycol) bis(2-aminopropyl ether) (CAS 9046-10-0) and the second amine is 5-amino-1,3,3-trimethylcyclohexanemethylamine (CAS 2855-16-2).

The above-mentioned mixtures of the first and the second amines is chosen and used because it resisted well flames when exposed under the flame test. Further, the Applicant has found out that the use of a combination of above mentioned first and second amines provides control of the speed of cross linking and increase the speed of the cross linking.

The two-component epoxy-based intumescent material according to the present invention may have the first amine and the second amine present in a ratio of from 60:40 to 99:1.

The ratio of from 60:40 to 99:1 is preferred because the reaction rate is depending on the proportional quantity of the second amine. If the ratio of the second amine is too high, it may lead to too fast reaction, which may adversely affect the application process.

Suitable commercially available first amine for use in the present invention include but is not limited to Ancamine 2432 from Evonik. And suitable commercially available second amine for use in the present invention include but is not limited to Ancamine 2914UF from Evonik.

The two-component epoxy-based intumescent material according to the present invention may have the first amine and the second amine present in the second part of the composition from 30 to 50% by weight of the total weight of the second part of the composition, preferably from 38 to 48% and more preferably from 43 to 47%.

The above-mentioned range based on the quantity of the epoxy resin in the first part and is preferred because it may lead to a complete reaction, without unreacted epoxy resin in the composition.

The one-component water-based material according to the present invention comprises a (meth)acrylic resin. Preferably the resin is an acrylic resin.

The (meth)acrylic resin used in the present invention may be linear or branched, may consist of copolymerized alkyl functional (meth)acrylic monomers, acid functional (meth)acrylic monomers, tertiary amine functional (meth)acrylic monomers, and may contain other functional groups. Branching in the (meth)acrylic resin can be induced by copolymerizing a polyfunctional comonomer and/or using a polyfunctional chain transfer agent and/or a polyfunctional initiator.

Suitable comonomers used to form (meth)acrylic resin of the present invention include the C1 to C12 esters of methacrylic and acrylic acids including, but not limited to methyl methacrylate, ethyl methacrylate, n-propyl, iso-propyl methacrylate, n-butyl methacrylate, isobutyl methacrylate, n-hexyl methacrylate, n-octyl methacrylate 2-ethylhexyl methacrylate, dodecyl (lauryl) methacrylate or the corresponding acrylates. Mixtures of compatible (meth)acrylate monomers may also be used. Methacrylic and acrylic comonomers based on esters of methacrylic and acrylic acid with polyethylene glycol) and/or polypropylene glycol and/or glycol ethers may also be used. Other additional vinyl comonomers that may be used include the vinyl esters (e.g. vinyl acetate and vinyl propionate); vinyl ethers; esters of crotonic acid, maleic acid, fumaric acid and itaconic acid; styrene; alkyl styrenes; acrylonitrile; butadiene; etc. as well as comonomers thereof. The particular monomers selected will depend, in large part, upon the end use for which the adhesives are intended. Suitable acid functional comonomers used to form (meth)acrylic resin of the present invention include, but are not limited to, methacrylic acid and acrylic acid.

Suitable hydroxyl functionalized comonomers used to form (meth)acrylic resin of the present invention that can be incorporated include, but are not limited to, 2-hydroxyethylmethacrylate, 2-hydroxylpropyl methacrylate and 2-hydroxybutyl methacrylate or the corresponding acrylates. Suitable amine functionalized comonomers used to form (meth)acrylic resin of the present invention include, but are not limited to, dimethylaminoethyl methacrylate, diethylaminoethyl methacrylate or the corresponding acrylates.

The (meth)acrylic resin can be prepared by free-radical polymerization, and molecular weight (Mn) is controlled by using a chain transfer agent, e.g. a thiol such as dodecyl mercaptan or catalytic chain transfer based on transition metal complexes. Branched (meth)acrylic resins are made by copolymerizing a multifunctional monomer and/or using a multifunctional chain transfer agent and/or using a multifunctional initiator.

Suitable commercially available acrylic resin for use in the present invention include but is not limited to Acronal DS 3502 from BASF.

The one-component water-based material according to the present invention may have the acrylic resin present from 6 to 30% by weight of the total weight of the first part of the composition, preferably from 8 to 25% and more preferably from 10 to 20%.

The above ranges are preferred because they may provide optimal heat and flame-retardant behaviour and rheological behaviour for the composition.

The one-component water-based material according to the present invention comprises a glass fibre.

Suitable commercially available glass fibre for use in the present invention include but is not limited to Faser glass 4.5mm from Saint-Gobain Vetrotex.

The one-component water-based material according to the present invention may have the glass fibre present from 0.1 to 5% by weight of the total weight of the composition, more preferably from 0.2 to 3% and even more preferably from 0.3 to 1.5%.

The one-component water-based material according to the present invention comprises water.

The one-component water-based material according to the present invention may have water present from 15 to 45% by weight of the total weight of the composition, more preferably from 20 to 40% and even more preferably from 25 to 35%.

The two-component epoxy-based intumescent material and the one-component water-based material according to the present invention comprises a flame-retardant compound.

The flame-retardant compound may be present in the first part of the composition and/or the second part of the composition in the two-component composition and may be same or different in the first part and the second part of the composition.

The flame-retardant compound is independently selected from the group consisting of, aluminium trihydroxide, aluminium hydroxide, mica, calcium carbonate, arsenic oxide, expanded graphite, calcium sulfate, cyanuric acid derivatives, cresyl diphenyl phosphate, triphenyl phosphate, tricresyl phosphate, tris-(isopropylated phenyl)-phosphate, trixylyl phosphate, tritoluyl phosphate, 2-ethylhexyl diphenyl phosphate, decyl diphenyl phosphate, tris-(2-chloroethyl)-phosphate, tris-(2-chloropropyl)-phosphate, tris-(2,3-dibromopropyl)-phosphate, tetrakis-(2-chloro)-ethylene diphosphate, dimethyl methyl phosphonate, diethyl ethyl phosphonate, chloroparaffins, hexabromobenzene, brominated diphenylethers, dibromoneopentyl glycol, mono pentaerythritol, dipentaerythritol, coated red phosphorus and mixtures thereof, preferably selected from cresyl diphenyl phosphate, calcium carbonate, mica, aluminium trihydroxide, aluminium hydroxide ammonium polyphosphate and mixtures thereof.

The above preferred flame-retardant compounds are preferred because they enable that the composition according to the present invention may be applied as a thin and lightweight layer of a protective coating, which reduce propagation of temperature and provides flame retardant and heat insulation properties.

Suitable commercially available flame-retardant compounds for use in the present invention include but are not limited to Omya BLH from Omya and Disflamoll DPK from Lanxess.

The two-component epoxy-based intumescent material according to the present invention may have the flame-retardant compound present in the first part from 35 to 65% by weight of the total weight of the first part of the composition, preferably from 45 to 60% and more preferably from 51 to 57%.

The two-component epoxy-based intumescent material according to the present invention may have the flame-retardant compound present in the second part from 20 to 65% by weight of the total weight of the second part of the composition, preferably from 50 to 60% and more preferably from 51 to 57%.

The one-component water-based material according to the present invention may have the flame-retardant compound present from 30 to 65% by weight of the total weight of the composition, preferably from 35 to 60% and more preferably from 38 to 55%.

The above ranges provide good viscosity for the composition, as well as good mixing properties. Especially, if the quantity of the flame-retardant compound is too low, the thermal propagation properties may be adversely affected, and further, the composition may become free flowing, and therefore, difficult to mix. Whereas too high quantities may have a negative impact to an application process.

The two-component epoxy-based intumescent material or the one-component water-based material according to the present invention may further comprise a rheology modifier.

The rheology modifier may be present in the first part of the composition and/or the second part of the composition in the two-component composition and may be same or different in the first part and the second part of the composition.

The rheology modifier is preferably selected from the group consisting of fumed silica, fused silica, amorphous silica, hydrous silica, mineral nano silicate clay, and mixtures thereof, more preferably the rheology modifier is fumed silica.

Fumed silica is specifically preferred rheology modifier because its presence may enhance the viscosity of the composition during the application process (spraying). Examples of such fumed silicas include polydimethylsiloxane-treated silicas and hexamethyldisilazane-treated silicas.

Suitable commercially available rheology modifiers for use in the present invention include but are not limited to CAB-O-SIL ND-TS, TS610, TS710 and TS720 from Cabot Corporation and AEROSIL R805, R8200, 300 and 200 from Degussa Corporation.

The two-part, room temperature curable heat and fire retardant composition according to the present invention may have the rheology modifier present in the first part of the composition from 0.1 to 5% by weight of the total weight of the first part, preferably from 0.2 to 3% and more preferably from 0.3 to 1.5% and/or the rheology modifier may be present in the second part of the composition from 0.1 to 5% by weight of the total weight of the second part, preferably from 0.2 to 3% and more preferably from 0.3 to 1.5%.

The one-component water-based material according to the present invention may have the rheology modifier present from 0.1 to 5% by weight of the total weight of the first part of the composition, preferably from 0.2 to 5% and more preferably from 0.2 to 3%.

The above ranges have been found to be ideal to provide a good viscosity profile for the first and the second parts without viscosity built up.

The two-component epoxy-based intumescent material or the one-component water-based material according to the present invention may further comprises a pigment.

The pigment may be present in the first part of the composition and/or the second part of the composition in the two-component composition and may be same or different in the first part and the second part of the composition.

The pigment is preferably selected from the group consisting of titanium dioxide, carbon black, graphite, iron oxide and mixtures thereof, preferably the pigment is selected from the group consisting of titanium dioxide, carbon black, iron oxide, and mixtures thereof.

The two-component epoxy-based intumescent material according to the present invention may have the pigment present in the first part of the composition from 0.1 to 5% by weight of the total weight of the first part, more preferably from 0.2 to 3% and even more preferably from 0.3 to 1.5% and/or the pigment may be present in the second part of the composition from 0.1 to 5% by weight of the total weight of the second part, preferably from 0.2 to 3% and more preferably from 0.3 to 1.5%.

The one-component water-based material according to the present invention may have the pigment present from 0.1 to 5% by weight of the total weight of the composition, more preferably from 0.2 to 3% and even more preferably from 0.3 to 1.5%.

The two-component epoxy-based intumescent material according to the present invention is prepared by first combining all the ingredients of the first part in one container and mixing them and secondly combining all the ingredients of the second part in another container and mixing them, and subsequently combining and mixing the first and second parts prior to the use.

The two-component epoxy-based intumescent material according to the present invention wherein the first part and the second part are mixed in a ratio of from 1.9:1.1 to 2.1 :0.9, preferably in ratio of 2 :1.

The above-mentioned range is based on the quantity of the epoxy resin in the first part and the total amine quantity in the second part, and is preferred, because it may lead to a complete reaction, without unreacted epoxy resin be present in the final composition.

The one-component water-based material according to the present prepared by combining all the ingredients and mixing them.

### Mat or fleece

As used herein, the term "mat or fleece" refers to any thermally stable mat or fleece in the art. In the present invention, the mat or fleece can have different types of surfaces constructed from glass fibre.

Preferably, the mat or fleece is a glass fibre mat or fleece. When the glass fibre mat or fleece is used as the mat or fleece in the present invention, the heat resistance, the electrical non-conductivity and the cost-effectiveness of the fire protection composite according to the present invention are further improved.

Preferably, the thickness of the mat or fleece is from 0.2 to 1 mm, and preferably is from 0.2 to 0.7 mm. When the thickness of the mat or fleece is within the above ranges, an optimum balance between the necessary thickness for sufficient protection and the smallest possible thickness to save installation space in the battery system is achieved.

In a preferred embodiment, the fibre diameter of the mat or fleece is from 5 µm to 20 µm, and preferably 8 µm, 10 µm and/or 13 µm. When the fibre diameter of the mat or fleece is within the above ranges, the production of the mat or fleece has sufficient stability.

In another preferred embodiment of the present invention, the fibre length of the mat or fleece is from 5 mm to 30 mm. When the fibre length of the mat or fleece is within the above range, the production of the mat or fleece has sufficient stability.

Suitable commercially available mat or fleece for use in the present invention includes but is not limited to Johns Manville.

In another yet preferred embodiment of the present invention, the mat or fleece contains a binder and/or a coating. The binder may be any conventional binder in the art, and is preferably a urea formaldehyde resin and polymer dispersion. The coating may be any conventional coating in the art, and is preferably aluminium hydroxide and/or carbonate sulphate. When urea formaldehyde resin and polymer dispersion, and/or aluminium hydroxide and/or carbonate sulphate is used in the present invention, the heat resistance, the electrical non-conductivity, the cost-effectiveness and/or the compatibility between the components of the fire protection composite according to the present invention are further improved.

In a preferred embodiment of the present invention, the mat or fleece is embedded in the coating and/or placed on the surface of the coating.

The present invention further provides a process for preparing the fire protection composite according to the present invention, comprising: applying the liquid applied coating in the present invention on a substrate; subsequently placing the mat or fleece in the present invention on the coating; applying another liquid applied coating in the present invention on the mat or fleece, if necessary; and drying the coating at room temperature or an elevated temperature, preferably of 25 to 90°C. Preferably, the substrate used in the present invention may be an e-coated steel or aluminium substrate, and more preferably is an e-coated steel substrate.

In a preferable embodiment of the present invention, when the two-component epoxy-based intumescent material is used as the liquid applied coating in the present invention, the two components are mixed, preferably in a ratio of 2:1, to obtain the coating before applying.

The applying of the liquid applied coating and the mixing of the two components, if any, can be carried out by any conventional method with any conventional apparatus in the art. Preferably, the liquid applied coating is applied by doctor blade method, spray coating or flat streaming. In a preferable embodiment of the present invention, when the two-component epoxy-based intumescent material is used as the liquid applied coating in the present invention, depending on the degree of automation, a mixer for mixing the two components may be integrated in the equipment for applying the liquid applied coating.

The present invention also relates to use of a fire protection composite according to the present invention for electric vehicle battery, and preferably for battery housings in electric vehicles.

Furthermore, the present invention relates to an electric vehicle battery containing a fire protection composite according to the present invention.

In addition, the present invention relates to a process for preparing an electric vehicle battery according to the present invention, comprising: preparing a fire protection composite on a lid and/or housing of the electric vehicle battery according to the process for preparing the fire protection composite according to the present invention.

### Examples

### 1. Preparation of fire protection composites

The fire protection composite of Example 1 according to the present invention was prepared as follows:
All the ingredients of the first part in the following Table 1 were combined in one container (Flacktec plastic container) and mixed by Flacktec speed mixer to obtain a first part, and at the same time all the ingredients of the second part in the following Table 1 were combined in another container (Flacktec plastic container) and mixed by Flacktec speed mixer to obtain a second part.

**Table 1**

| First part | | |
|---|---|---|
| Name | Chemical compound | wt% |
| D.E.R. 331 from Olin | Epoxy resin based on Bisphenol-A and epichlorohydrin | 42,9 |
| Exolit AP 422 from Clariant | Ammonium polyphosphate | 20,3 |
| Apyral 16 | Aluminum trihydroxide | 27,8 |
| Disflamoll DPK from Lanxess | Cresyl diphenyl phosphate | 7,5 |
| Cab O Sil M 720 from Cabot | Fumed silica | 0,5 |
| TiO2 (Rutil) from Kronos | Titanium dioxide | 1 |

| Second part | | |
|---|---|---|
| Name | Chemical compound | wt% |
| Ancamine 2432 from Evonik | Modified aliphatic amine | 27,5 |
| Ancamine 2914UF from Evonik | Modified aliphatic amine | 16,5 |
| Exolit AP 422 from Clariant | Ammonium polyphosphate | 27,9 |
| Omya BLH from Omya | Calcium carbonate | 26,1 |
| Cab O Sil M 5 from Cabot | Fumed silica | 1 |
| Bayferrox 306 from Lanxess | Iron oxide | 1 |

The first part and second part were combined in the ratio of 2:1 and mixed to obtain a liquid applied coating. Then, the coating was applied by doctor blading in an amount of 40 mL on an e-coated steel plate having a size of 250 mm x 190 mm. After that, a glass fibre mat (having a thickness of 610µm, a fibre diameter of 10µm, and a fibre length of 8 mm, which was available from Johns Manville) cut to size for the area to be protected, 150 mm x 105 mm, was placed on the coating. Finally, the composite thus obtained was cured at room temperature overnight.

The fire protection composite of Example 2 according to the present invention was prepared as follows:
All the ingredients in the following Table 2 were combined in one container (Flacktec plastic container) and mixed by Flacktec speed mixer to obtain a liquid applied coating.

**Table 2**

| Name | Chemical compound | wt% |
|---|---|---|
| Tap water | water | 27.59 |
| Triethanolamine | Triethanolamine 85% | 0.33 |
| Foamaster MO NXZ from BASF | Non-ionic tensides | 0.06 |
| Tetrapotassium pyrophosphat | Tetrakalium pyrophosphate | 0.30 |
| Kelzan | Xanthan | 0.08 |
| CMC 75a Pulver | Carboxymethyl cellulose | 0.30 |
| JMAC LP 10% | Silver chloride | 0.01 |
| FASER, GLAS-, 4.5 mm | Glass fibre | 0.50 |
| Arbocel ZZ 8-1 R | Glass oxide, non-fibre | 0.50 |
| Omyacarb 4HD | Calcium carbonate | 6.67 |
| Portaflame SG 100 LV | Aluminiumhydroxid | 19.99 |
| KALIUM-ALUMINIUM-SILIKAT | Potassium-ALUMINIUM-SILICAT | 5.00 |
| Isopropanol | 2-propanol 99.9% | 1.00 |
| Muskovit | mica | 8.50 |
| Acronal DS 3502 from BASF | Acrylic polymer | 15.00 |
| Mica MU 247 | Mica | 14.17 |

The liquid applied coating was applied by bar coating in an amount of 50 mL on an e-coated steel plate with a size of 250 mm x 190 mm. After that, a glass fibre mat (having a thickness of 610µm, a fibre diameter of 10µm, and a fibre length of 8 mm, which was available from Johns Manville) cut to size for the area to be protected, 150 mm x 105 mm, was placed on the coating. Finally, the composite thus obtained was dried at room temperature overnight.

The fire protection composites of Examples 3 and 4 according to the present invention were prepared in the same way as those in Examples 1 and 2 respectively, except that before curing the composite, another liquid applied coating was applied on the composite in the same way as that before placing the mat. That is to say, the fire protection composites of Examples 3 and 4 were prepared by applying the liquid applied coating on an e-coated steel plate, placing a glass fibre mat on the coating, applying the same liquid applied coating in the same manner as before, and then curing the composite thus obtained.

### 2. Tests of the properties of fire protection composites

### 2.1 Testing Adhesion of mat to the coatings

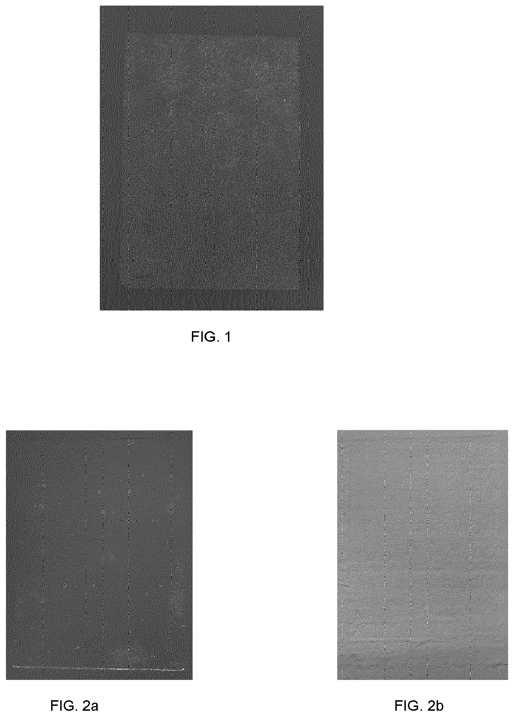

Both of the fire protection composites of Examples 1 and 2 were tested as per the three-point bending test according to ISO 178 for plastic substrates & ISO 7438 for metal substrates. The results show that, both of them pass these tests. For example, as illustrated in Figure 1, the fire protection composite of Example 2 had a good adhesion of the mat on the coating.

### 2.2 Testing whether the mat can be coated with the coatings

In order to test whether the mat can be coated with the coatings (i.e. whether there is sufficient wetting of the liquid-applied fire protection coating on the mat), both the fire protection composites of Examples 3 and 4 were visually observed. As illustrated in Figures 2a (the picture of the fire protection composite of Example 4) and 2b (the picture of the fire protection composite of Example 3), the pictures show that both of them had good wettability of the liquid-applied fire protection coating on the mat.

### 2.3 Testing heat protection abilities and adhesion in contact with flames (flame tests)

Thermal propagation prevention was tested by comparing the fire protection composites of Examples 3 and 4, and a reference e-coated steel without any coating and mat. Fire test target is to have a temperature (T2) which is less than 300°C after the composite is exposed to a temperature of 1000°C for 10 min.

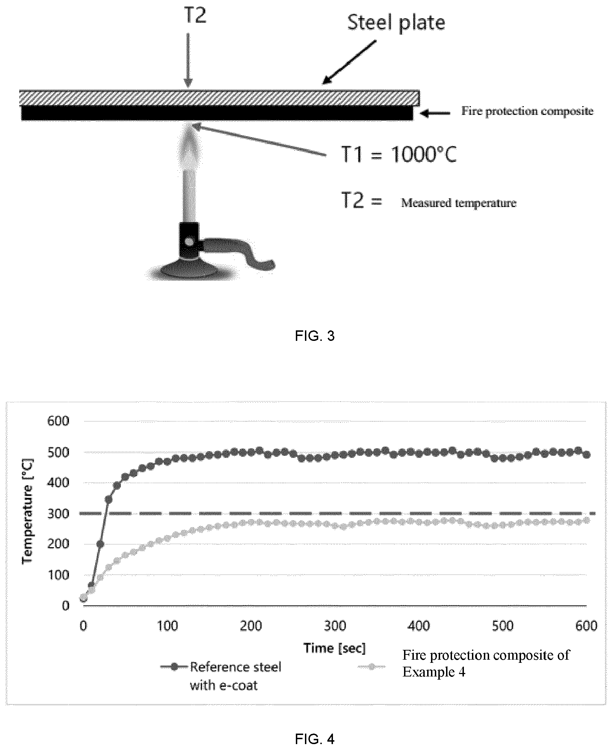

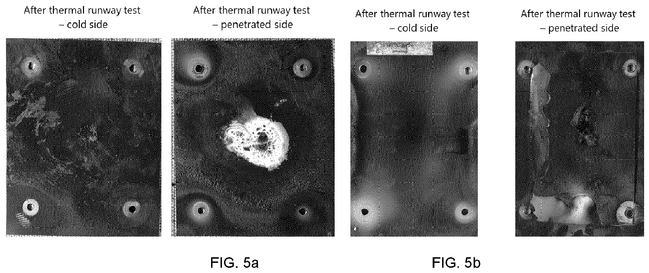

Thermal propagation test method - the basic principle is illustrated in Figure 3. T2 is the measured temperature which is then illustrated in the diagram vs. time. For example, the graph illustrates the temperature development over the time of the fire protection composite of Example 4 and the reference e-coated steel without any coating and mat. The test results are illustrated in Figure 5. The fire protection composite according to the present invention performs the best in this test and is able to maintain the temperature (T2) well below 300°C for at least 10 minutes.

### 2.4 Testing mechanical stability of the composites in case of explosion (pyro tests)

The fire protection composites of Examples 1 and 2, and a reference e-coated steel substrate without any coating and mat were tested according to the thermal propagation tests with a 50 Ah prismatic cell. The results show that, the fire protection composites according to the present invention protect the e-coated steel substrate; in particular, compared to the reference e-coated steel substrate, in the fire protection composites according to the present invention, the e-coatings were not damaged on the cold side and thus continued to provide corrosion protection, as illustrated in Figs. 5. Fig. 5a illustrates the pictures of the reference e-coated steel substrate without any coating and mat, and Fig. 5b illustrates the pictures of the fire protection composite of Example 2 after a thermal runaway test with a 50 Ah prismatic cell.

From the above results, it can be seen that the fire protection composite according to the present invention exhibits improvements in fire protection, heat shielding behaviour and mechanical stability.

## Claims

1. A fire protection composite, which is made of a liquid applied coating and a mat or fleece.

2. The fire protection composite according to claim 1, wherein the liquid applied coating is a two-component epoxy-based intumescent material and/or a one-component water-based material with inorganic fillers and/or fibres.

3. The fire protection composite according to claim 2, wherein the two-component epoxy-based intumescent material comprises:
a first part comprising
1) an epoxy resin; and
2) a flame-retardant compound;
and
a second part comprising
1) a first amine comprising N,N'-bis(3-aminopropyl)ethylenediamine and 3,3'-oxybis(ethylene-oxy) bis(propylamine);
2) a second amine comprising m-phenylenebis(methylamine) and formaldehyde, polymer with 1,3-benzenedimethanamine and phenol; and
3) a flame-retardant compound.

4. The fire protection composite according to claim 2, wherein the one-component water-based material with inorganic fillers and/or fibres is a non-reactive water-based dispersion containing an acrylic binder, glass fibres and a flame-retardant component.

5. The fire protection composite according to any of claims 1 to 4, wherein the mat or fleece is a glass fibre mat or fleece, and/or the thickness of the mat or fleece is from 0.2 to 1 mm, and preferably is from 0.2 to 0.7 mm.

6. The fire protection composite according to any of claims 1 to 5, wherein the fibre diameter of the mat or fleece is from 5 µm to 20 µm, and is preferably 8 µm, 10 µm and/or 13 µm; and/or the fibre length of the mat or fleece is from 5 mm to 30 mm.

7. The fire protection composite according to any of claims 1 to 6, wherein the mat or fleece contains a binder, which is preferably a urea formaldehyde resin and polymer dispersion; and/or a coating, which is preferably aluminium hydroxide and/or carbonate sulphate.

8. The fire protection composite according to any of claims 1 to 7, wherein the thickness of the composite is from 0.2 to 4 mm, and preferably from 0.5 to 2 mm.

9. The fire protection composite according to any of claims 1 to 8, wherein the mat or fleece is embedded in the coating and/or placed on the surface of the coating.

10. A process for preparing a fire protection composite according to any of claims 1 to 9, comprising: applying the liquid applied coating as defined in any of claims 1 to 9 on a substrate, preferably by doctor blade method, spray coating or flat streaming; subsequently placing the mat or fleece as defined in any of claims 1 to 9 on the coating; applying another liquid applied coating as defined in any of claims 1 to 9 on the mat or fleece, if necessary; and drying the coating at room temperature or an elevated temperature, preferably of 25 to 90°C.

11. Use of a fire protection composite according to any of claims 1 to 9 for electric vehicle battery, and preferably for battery housing in electric vehicle.

12. An electric vehicle battery containing a fire protection composite according to any of claims 1 to 9.

13. A process for preparing an electric vehicle battery according to claim 12, comprising: preparing a fire protection composite on a lid and/or housing of the electric vehicle battery according to the process as claimed in claim 10.
